# EUROPEAN PATENT SPECIFICATION

(11) **EP 1 626 601 B1**
(45) Date of publication and mention of the grant of the patent: **07.10.2009**
(21) Application number: 05016788.1
(22) Date of filing: 02.08.2005
(51) Int. Cl.: H04W 36/14

(54) **Inter-system handover with modified target cell selection**
Weiterreichen zwischen Systemen mit modifizierter Zielzellenauswahl
Transfert de communication inter-système d'une seléction d'une cellule cible modifiée

(30) Priority: 02.08.2004 GB 0417198
(43) Date of publication of application: 15.02.2006
(73) Proprietor: NEC CORPORATION, Tokyo (JP)
(72) Inventor: Ormson, Richard, Reading Berkshire RG2 0TD (GB)
(74) Representative: Glawe, Delfs, Moll

(56) References cited:
- US-A1- 2002 105 927
- US-A1- 2002 197 992
- US-A1- 2003 031 143
- US-B1- 6 597 911
- LUGARA D ET AL: "UMTS to GSM handover based on compressed mode technique" COMMUNICATIONS, 2004 IEEE INTERNATIONAL CONFERENCE ON PARIS, FRANCE 20-24 JUNE 2004, PISCATAWAY, NJ, USA,IEEE, vol. 5, 20 June 2004 (2004-06-20), pages 3051-3055, XP010709763 ISBN: 0-7803-8533-0

## Description

### BACKGROUNDS OF THE INVENTION

### 1. Field of the Invention

The present invention relates to a method of transferring operation of a handset from a first network to a second network, and to a related handset.

### 2. Description of the Related Art

When employing a handset offering at least dual mode operability, situations can commonly arise requiring that the handset transfer its operation from a first network to a second network.

For example, for cell phones offering third generation (3G) operability by way of a UMTS connection, and second generation (2G) operability by way of a GSM connection, a requirement can commonly arise for the cell phone to conduct a handover or reselection from a UMTS cell to a GSM cell.

In accordance with the current state of the art, and indeed in accordance with current standards, a transfer from a UMTS network to a GSM network generally requires that the GSM cells in the vicinity of cell phone handset be monitored while the handset is operating on the 3G UMTS network.

Disadvantages and limitations arise however in relation to such handovers in view of resulting Software complications. A requirement to generate gaps in the operation on the 3G UMTS network connection also arises, and is achieved in the so-called compressed mode of operation.

Thus, within the current state of the art, when it is required to hand-off a call from 3G UMTS network, for example for coverage or load balancing reasons, the above-mentioned problems and limitations can disadvantageously arise.

US 2002/0197992 A1 discloses a method for intersystem handover from a UMTS/CDMA to a GSM system, wherein the mobile device receives - in idle mode - a target cell list, compares the related power levels to those of the serving cell, and performs handover based on the comparison results. Moreover, US 2003/0031143 A1 discloses a GSM/UMTS intersystem handover, wherein gaps are inserted in the data transmission by use of data compression, the gaps being used for RSSI measurements of target cells; decisions for handover are based on a RSSI comparison.

### SUMMARY OF THE INVENTION

The present invention seeks to provide for a method of transferring operation of a handset from a first network to a second network, and to a related handset, having advantages over known such methods and devices.

According to one aspect of the present invention, there is provided a method of transferring operation of a mobile radio communications device from a 3G network to a 2G network according to the features of claim 1.

The invention is particularly advantageous in allowing for handover between a first network and a second network but which does not require monitoring of the said second network whilst the said first network is in use.

In particular, and as compared with the state of the art, the actual selection of the relevant cell to which the device is to achieve handover is performed as the first stage of the handover procedure.

Network handover can therefore advantageously be supported without requiring monitoring of the network to which connection is to be made. Also it proves possible to remove the requirement for compressed mode operation within a 3G mobile telecommunications system.

Advantageously, the method includes the steps of connecting to the first of the said cells of the second network identified as having a signal power level above the threshold.

Further, the comparison step comprises a search for a BTS channel with a received signal above the said threshold level.

In one arrangement, the cells of the said second network are identified by way of call control data received as part of the signal information on the said first network.

Also, the said threshold level can advantageously be set by way of network messaging of the said first network.

Advantageously, the method further includes the step of providing positional information from the handset serving to assist with identification of cells of the second network.

Alternatively, or in addition, the method can include the step of forwarding from the handset identification of the particular cell to which connection is to be made.

Preferably, such identification can be provided by way of an Inter RAT measurement report.

In particular, the method can be provided for transferring operation of the handset from a 3G network to 2G network.

According to another aspect of the present invention, there is provided a mobile radio communications device arranged for operation with a 3G network and a 2G network and for transferring connectivity from said 3G network to said 2G network according to the features of claim 5.

As will be appreciated from the above, such a handset can provide for the advantages of the method as defined above.

Thus, the device can advantageously be arranged to connect to the first of the cells of the second network identified as having a signal power level above the said threshold.

Also, the said means for comparing can be arranged for searching for a BTS channel with a received signal strength above the said threshold revel.

Further, the device is advantageously arranged to receive call control data by way of the said first network and which can serve to identify the said cells of the said second network.

Yet further, the device is advantageously arranged to have the said threshold level set by means of first network messaging signals.

Also, the device can be arranged to provide for positional information serving to assist in the identification of the cells of the said second network.

Yet further, the device can advantageously be arranged to generate and transmit a report identifying the cell of the second network to which connection is to be made.

Advantageously, the said report can be provided by way of an Inter RAT measurement report.

In particular, the device is arranged so as to provide for transfer from a 3G network to a 2G network.

### BRIEF DESCRIPTION OF THE DRAWINGS

The invention is described further hereinafter, by way of example only, with reference to the accompanying drawings in which:
Fig. 1 is a schematic diagram of a handset embodying the present invention; and
Fig. 2 is a flow diagram serving to illustrate the method steps of a method embodying the present invention.

### DESCRIPTION OF THE PREFERRED EMBODIMENT

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

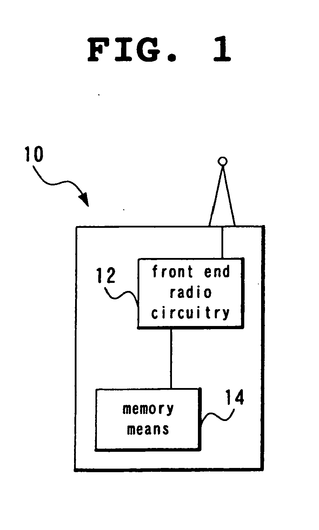

Turning first to Fig. 1, there is illustrated a diagram of a mobile radio communications device handset 10 arranged for operation in accordance with the present invention.

The handset 10 comprises front end radio circuitry 12 and processing and memory means 14 connected thereto for controlling the operation thereof, and for receiving data therefrom.

The processing and memory means 14 is arranged to conduct the reference to the 2G neighbour list and to conduct the search for the first of the cells within that list having a BTS channel exhibiting a received signal strength above a certain threshold value.

As discussed, the particular threshold value can be set remotely by way of network signaling received at the handset.

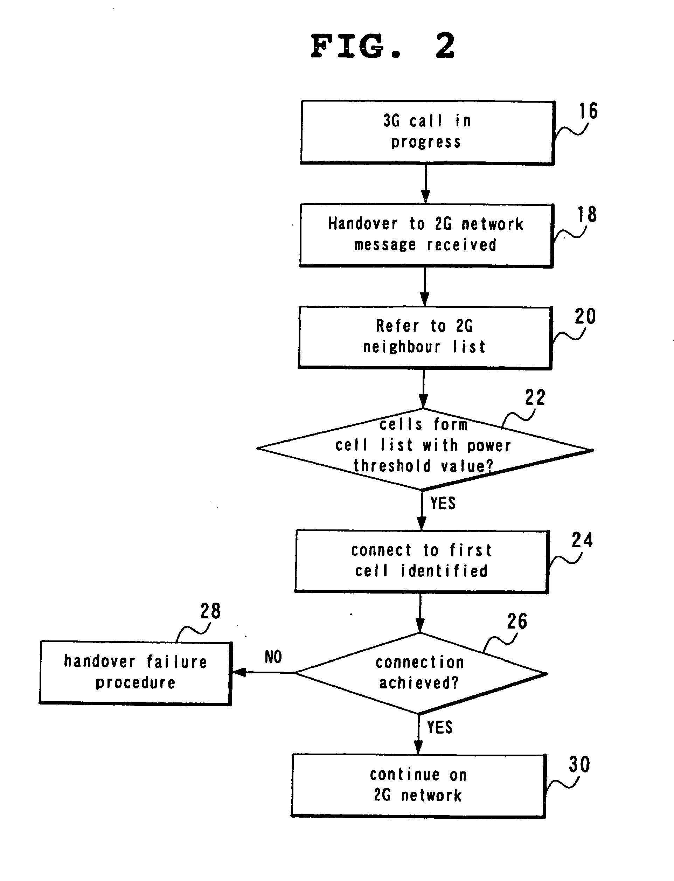

Thus, and as will be described in further detail with reference to Fig. 2, the handset 10, while connected to a 3G network, and upon receipt of a handover message requiring handover to a 2G network, can conduct an accelerated search in order to identify a likely appropriate cell of the 2G network to connect to and without requiring ongoing monitoring of the 2G network whilst operating on the 3G network.

In considering the example illustrated with reference to Fig. 2, it should be appreciated that, as noted, the handset is arranged to connect to both a 3G and a 2G network. However, when operating in accordance with the 3G network, and without the above-mentioned compressed mode of operation, it is not possible to monitor activity on one network while connected to the other. Also, it should be assumed that a call is in progress on the 3G network as illustrated at 16.

As noted above, for reasons of network coverage or for load balancing etc. it can often be required for the 3G network to hand-off the call to a 2G network. In order to achieve this, the 3G network sends a handover message 18 to the handset.

In accordance with standards arising in the current state of the art, such a handover message would indicate the 2G Absolute Radio Frequency Channel Number (ARFCN) to which the handset should move its connection. The choice of the actual ARFCN employed is based upon monitor reports that the handset has previously sent to the 3G network.

However, in accordance with the present invention, it should be appreciated that the handset is not arranged for, nor does it necessarily have the ability for, monitoring activity on the other network such that a preferred cell cannot then be identified within the handover message. A relevant field is therefore not included within such a handover message or the field can include a dummy value.

The handset can now enter a variant of the known blind handover procedure. Such known blind handover procedure is defined in current standards to allow a handset to connect to a cell that it has been monitoring but to which it is not currently synchronized. For such known blind handovers, the UTRAN system is generally informed of a suitable candidate from the neighbouring cells so as to execute a handover without requiring the specific user equipment measurements.

In accordance with the current standards, such known blind handover procedures are allowed 140ms in order to complete.

Returning to the illustrated embodiment of the present invention, the handset first refers to the 2G neighbour list at step 20 that it receives as part of standard call control messaging on the 3G network and then executes an accelerated search mechanism according to the present invention.

At steps 22 and 24, the handset effectively seeks to identify a cell from the cell list having a power level above a determined threshold level and to connect to the first cell so identified as exhibiting a power level above the said threshold level. Thus, the step of connecting to a desired cell is undertaken once that cell has been identified as the first exhibiting the appropriate power level and before searches against other cells have been conducted.

Should no such connection be achieved, the process can proceed by way of a handover failure procedure as indicated at step 24.

However, if successful, the connection continues on the 2G networks as indicated at step 30.

In particular, and within the accelerated search, of the present invention the handset simply searches for the first BTS channel at step 24 exhibiting a received signal strength above the said threshold value and then seeks to connect to that BTS channel.

Advantages arise since, as compared with the standard blind handover, the selection of the relevant cell is performed at the first stage of the handover procedure. This means that, unlike blind handover, the handset cannot attempt handover to a cell it cannot receive.

To illustrate the example further, it is assumed that the maximum number of neighbouring cells allowed within a neighbour cell list is thirty-two, and that the only usable cell is the last found on that list. Then a search to identify that cell will take approximately 12ms (i.e. 32x350us) given that a search of each cell takes 350us.

It will be clear however that, in most cases, the time taken to complete the search would be considerably less as the number of neighbouring cells rarely reaches thirty-two. Also, on average, generally at least half of the cells on the list are usable due to geographical distribution of the cells. Thus, on average, the search would be successful after two measurements, which would therefore require an average overall search time of less that 1ms.

This quite readily sits within the tolerance allowed under existing 3GPP blind handover mechanisms.

Turning now to the network arrangement, it will of course be appreciated that the network is no longer provided with identification of the cell to which the handset will be moving to. While it will be possible to revise network signalling so as to allow for movement to any of the defined neighbours, this might not be seen as the most appropriate solution.

Thus, if the handset supports positioning functionality, the number of potential cells to which connection would be made can advantageously be reduced through such positional information. Alternatively, the handset can be arranged to send a report following the 2G search so as to indicate to which cell the handset will be moving to.

Advantageously such information can readily be provided by way of an existing message such as the inter RAT measurement report.

To summarise therefore, the invention advantageously provides a mechanism which allows for handover from a 3G network to a 2G network to be supported without requiring monitoring of the 2G network, nor support of compressed mode. Such an handover can advantageously be achieved employing currently existing air interface messaging and with minimal changes required to the network.

## Claims

1. A method of transferring operation of a mobile radio communications device (10) from a 3G network to a 2G network, while a call is in progress on the 3G network, and including the steps of:
conducting an accelerated search to identify a likely appropriate cell of the 2G network to connect to without requiring ongoing monitoring of the 2G network by referring to a 2G neighbour list as received as part of standard call control messaging on the 3G network upon receipt of a handover message requiring handover to the 2G network for identifying cells of the 2G network;
comparing signal power levels of the identified cells with a threshold level; and
connecting to the first of said cells of the 2G network identified as having a signal power level above the threshold.

2. A method as set forth in Claim 1, wherein the said threshold level can advantageously be set by way of network messaging of the 3G network.

3. A method as set forth in Claim 1 or 2, further including the step of providing positional information from the device (10) and serving to assist with identification of cells of the 2G network.

4. A method as set forth in any one or more of claims 1 to 3, wherein
selection of the cell to which the device (10) is to achieve handover is performed as the first stage of the handover procedure.

5. A mobile radio communications device (10) arranged for operation with a 3G network and a 2G network and for transferring connectivity from said 3G network to said 2G network while a call is in progress in said 3G network, the device including means (14) adapted for conducting an accelerated search to identify a likely appropriate cell of the 2G network to connect to without requiring ongoing monitoring of the 2G network by referring to a 2G neighbour list as received as part of standard call control messaging on the 3G network upon receipt of a handover message requiring handover to the 2G network for identifying cells of the 2G network; means (14) for comparing signal power levels of the identified cells with a threshold level, and means arranged to connect the device to the first of the cells of the 2G network identified as having a signal power level above the said threshold.

6. A device as set forth in claim 5, wherein the means (14) for comparing is arranged for searching for a base transceiver station, BTS, channel with a received signal strength above the said threshold level.

7. A device as set forth in claim 5 or 6, further arranged to receive call control data by way of the 3G network and which serves to identify the said cells of the 2G network.

8. A device as set forth in any one or more of Claims 5, 6 or 7, further arranged to have the said threshold level set by means of 3G network messaging signals.

9. A device as set forth in any one or more of Claims 5, 6, 7 or 8, further arranged to generate and transmit a report identifying the cell of the 2G network to which connection is to be made.

10. A device as set forth in claim 9, wherein the said report can be provided by way of an Inter radio access technology, RAT, measurement report.

## Patentansprüche

1. Ein Verfahren zum Überleiten des Betriebs einer mobilen Funkkommunikationsvorrichtung (10) von einem 3G-Netzwerk auf ein 2G-Netzwerk, während ein Anruf auf dem 3G-Netzwerk im Gange ist, mit den Schritten:
Durchführen einer beschleunigten Suche zum Identifizieren einer wahrscheinlich geeigneten Zelle des 2G-Netzwerks zum Verbinden damit, ohne dass eine andauernde Überwachung des 2G-Netzwerks erforderlich ist, durch Bezugnehmen auf eine 2G-Nachbarliste, die als Teil einer Standardanrufsteuerungsnachrichtübermittlung in dem 3G-Netzwerk bei Empfang einer Weiterreichungsmitteilung empfangen wurde, die ein Weiterreichen zu dem 2G-Netzwerk zum Identifizieren von Zellen des 2G-Netzwerks erfordert;
Vergleichen der Signalleistungspegel der identifizierten Zellen mit einem Schwellenpegel; und
Verbinden mit der ersten der Zellen des 2G-Netzwerks, die mit einem Signalleistungspegel über der Schwelle identifiziert wird.

2. Verfahren gemäß Anspruch 1, wobei der Schwellenpegel vorteilhafterweise durch Netzwerknachrichtenübermittlung des 3G-Netzwerks festgelegt werden kann.

3. Verfahren gemäß Anspruch 1 oder 2, das weiter den Schritt des Vorsehens von Lageinformationen von der Vorrichtung (10) und Helfens zum Assistieren bei der Identifizierung von Zellen des 2G-Netzwerks umfasst.

4. Verfahren gemäß einem oder mehreren der Ansprüche 1 bis 3, wobei die Auswahl der Zelle, zu welcher die Vorrichtung (10) das Weiterreichen erreichen soll, als erste Stufe des Weiterreichungsvorgangs durchgeführt wird.

5. Mobile Funkkommunikationsvorrichtung (10), die eingerichtet ist für den Betrieb mit einem 3G-Netzwerk und einem 2G-Netzwerk und zum Überleiten der Anschlussfähigkeit von dem 3G-Netzwerk auf das 2G-Netzwerk während ein Anruf in dem 3G-Netzwerk im Gange ist, wobei die Vorrichtung Mittel (14), die früher das Durchführen einer beschleunigten Suche zur Identifizierung einer wahrscheinlich geeigneten Zelle des 2G-Netzwerks zum Verbinden damit, ohne dass eine andauernde Überwachung des 2G-Netzwerks erforderlich ist, geeignet ist durch Bezugnehmen auf eine 2G-Netzwerkliste, die als Teil einer Standardanrufsteuerungsnachrichtenübermittlung in dem 3G-Netzwerk bei Empfang einer Weiterreichungsmittellung, welche das Weiterreichen an das 2G Netzwerk zum Identifizieren von Zellen des 2G-Netzwerks erfordert; Mittel (14) zum Vergleichen von Signalleistungspegeln der identifizierten Zellen mit einem Schwellenpegel und Mittel, das eingerichtet ist, die Vorrichtung mit der ersten in den Zellen des 2G-Netzwerks zu verbinden, die mit einem Signalleistungspegel über der Schwelle identifiziert wird.

6. Vorrichtung gemäß Anspruch 5, wobei das Mittel (14) zum Vergleichen zum Suchen nach einem Basis-Funkstation-, BTS-, Kanal mit einer empfangenen Signalstärke über dem Schwellenpegel eingerichtet ist.

7. Vorrichtung gemäß Anspruch 5 oder 6, die weiter eingerichtet ist zum Empfangen von Anrufsteuerungsdaten mittels des 3G-Netzwerks und die dazu dient, die Zellen des 2G-Netzwerks zu identifizieren.

8. Vorrichtung gemäß einem oder mehreren der Ansprüche 5, 6 oder 7, die weiter so eingerichtet ist, dass sie den Schwellenpegel mittels 3G-Netzwerknachrichtenübermittlungssignalen einstellen lässt.

9. Vorrichtung gemäß einem oder mehreren der Ansprüche 5, 6, 7 oder 8, die weiter eingerichtet ist zum Erzeugen und Übertragen eines Berichts, der die Zelle des 2G-Netzwerks identifiziert, mit welcher die Verbindung erfolgen soll.

10. Vorrichtung gemäß Anspruch 9, wobei der Bericht mittels eines Interfunkzugriffstechnologie-, RAT-, Messungsbericht vorgesehen werden kann.

## Revendications

1. Procédé consistant à transférer une exploitation d'un dispositif de communication radio mobile (10) d'un réseau 3G à un réseau 2G, tandis qu'un appel est en cours sur le réseau 3G, et comportant les étapes ci-dessous consistant à :
exécuter une recherche accélérée pour identifier un cellule pertinente probable du réseau 2G à laquelle se connecter sans nécessiter une surveillance en continu du réseau 2G en se reportant à une liste de voisins 2G reçue dans le cadre d'une messagerie de commande d'appel standard sur le réseau 3G lors de la réception d'un message de transfert intercellulaire nécessitant un transfert intercellulaire au réseau 2G pour identifier des cellules du réseau 2G ;
comparer des niveaux de puissance de signal des cellules identifiées à un niveau seuil ; et
réaliser une connexion à la première desdites cellules du réseau 2G, identifiée en ce qu'elle comporte un niveau de puissance de signal supérieur au seuil.

2. Procédé selon la revendication 1, dans lequel ledit niveau seuil peut avantageusement être défini au moyen d'une messagerie de réseau du réseau 3G.

3. Procédé selon la revendication 1 ou 2, comportant en outre l'étape consistant à délivrer des informations de positionnement à partir du dispositif (10) et servant à aider à l'identification de cellules du réseau 2G.

4. Procédé selon l'une quelconque ou plusieurs des revendications 1 à 3, dans lequel la sélection de la cellule à laquelle le dispositif (10) est sur le point de mettre en oeuvre un transfert intercellulaire est exécutée en tant qu'un premier stade de la procédure de transfert intercellulaire.

5. Dispositif de communication radio mobile (10) agencé de manière à être exploité avec un réseau 3G et un réseau 2G et de manière à transférer une connectivité dudit réseau 3G audit réseau 2G tandis qu'un appel est en cours dans ledit réseau 3G, le dispositif comportant un moyen (14) apte à exécuter une recherche accélérée pour identifier une cellule pertinente probable du réseau 2G à laquelle se connecter sans nécessiter de surveillance en continu du réseau 2G en se reportant à une liste de voisins 2G reçue dans le cadre d'une messagerie de commande d'appel standard sur le réseau 3G lors de la réception d'un message de transfert intercellulaire nécessitant un transfert intercellulaire au réseau 2G pour identifier des cellules du réseau 2G ; un moyen (14) pour comparer des niveaux de puissance de signal des cellules identifiées à un niveau seuil, et un moyen agencé de manière à connecter le dispositif à la première desdites cellules du réseau 2G, identifiée en ce qu'elle comporte un niveau de puissance de signal supérieur audit seuil.

6. Dispositif selon la revendication 5, dans lequel le moyen (14) de comparaison est agencé pour rechercher un canal de station d'émission - réception de base (BTS) ayant une puissance de signal reçue supérieure audit niveau seuil.

7. Dispositif selon la revendication 5 ou 6, agencé en outre de manière à recevoir des données de commande d'appel par le bais du réseau 3G et lesquelles servent à identifier lesdites cellules du réseau 2G.

8. Dispositif selon la revendication 5, 6 ou 7, agencé en outre de manière à obtenir la définition dudit niveau seuil au moyen de signaux de messagerie de réseau 3G.

9. Dispositif selon la revendication 5, 6, 7 ou 8, agencé en outre de manière à générer et transmettre un rapport identifiant la cellule du réseau 2G à laquelle une connexion doit être réalisée.

10. Dispositif selon la revendication 9, dans lequel ledit rapport peut être délivré au moyen d'un rapport de mesure de technologies différentes d'accès radio, inter-RAT.
